(19) Europäisches Patentamt
European Patent Office
Office européen des brevets

(11) Publication number: **0 155 036**
**B1**

# (12) EUROPEAN PATENT SPECIFICATION

(45) Date of publication of patent specification: **19.11.87**

(51) Int. Cl.$^4$: **C 08 L 63/02**, C 08 L 33/08

(21) Application number: **85200237.7**

(22) Date of filing: **21.02.85**

## (54) Heat-curable polyepoxide-(meth)acrylate ester-styrene composition.

(30) Priority: **28.02.84 US 584413**

(43) Date of publication of application:
**18.09.85 Bulletin 85/38**

(45) Publication of the grant of the patent:
**19.11.87 Bulletin 87/47**

(84) Designated Contracting States:
**BE DE FR GB IT NL SE**

(56) References cited:
**EP-A-0 056 427**
**GB-A-1 165 623**
**GB-A-1 176 108**
**GB-A-1 240 709**
**US-A-2 604 464**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Corley, Larry Steven**
**6807 San Pablo Drive**
**Houston Texas 77083 (US)**

(74) Representative: **Aalbers, Onno et al**
**P.O. Box 302**
**NL-2501 CH The Hague (NL)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 155 036 B1

**Description**

The present invention is directed to a heat-curable composition comprising (1) a polyepoxide, (2) a polyacrylate or polymethacrylate ester of a polyol, (3) an unsaturated aromatic monomer, (4) an aromatic amine curing agent and (5) a free-radical initiator.

Curable compositions comprising polyester resins and styrene have generally been epoxy polyester (vinyl ester) compositions wherein a portion of the polyester is replaced with styrene or other ethylenically unsaturated monomer, see, for example, U.S. 3,634,542.

Polyether resins and styrene blends are also known. These blends generally exhibit poor processability, short pot life, high viscosity and cure with conventional curing agents to produce products which do not exhibit good physical properties, such as high heat deflection temperatures and retention of physical properties at elevated temperatures, see, for example U.S. 2,939,859 directed to a polyepoxide/styrene blend cured with peroxides and/or amines. While the compositions of U.S. 2,939,859 to exhibit a reduction of viscosity over an epoxy composition alone, the resulting products do not exhibit high heat deflection temperatures.

Other patents covering polyepoxide/styrene compositions are U.S. 3,099,638 and U.S. 3,009,898, which are concerned with the use of anhydride curing agents, optionally in the presence of a peroxide and/or tertiary amine accelerator.

Epoxy/styrene blends which can be cured with a special curing agent/curing accelerator blend, e.g., an acid anhydride in combination with an onium salt, to yield products which exhibit improved physical properties, especially retention of physical properties at elevated temperatures are disclosed and claimed in U.S. patent 4,284,753.

Compositions of epoxy resin and (meth)acrylate esters of polyols are known from U.S. 4,010,289, these compositions are proposed for film coatings which are cured via UV-radiation.

A composition has been found that exhibits high Heat Deflection Temperatures (HDT's) which comprises (1) an epoxy resin, (2) an ester of an ethylenically unsaturated monocarboxylic acid and styrene blend, (3) an aromatic amine and (4) a peroxide initiator.

The present invention is directed to an improved heat-curable epoxy composition, which when cured, yields compositions exhibiting improved physical properties such as increased heat deflection temperature, increased flexural strength and increased flexibility. These epoxy blend compositions are suitable for use in sheet moulding compositions (SMC), foam reservoir moulding (FRM) compositions, and structural applications such as automotive parts, e.g., reaction injection moulding (RIM) applications. They can be used in pultrusion processes to manufacture structural components such as panels, tubing and rods, especially sucker rods.

Accordingly, the present invention comprises a blend of

(1) 100 parts by weight of a polyepoxide, especially a normally liquid polyepoxide, and preferably a glycidyl ether of a polyhydric phenol,

(2) from 5 to 300 parts by weight of a blend comprising (a) from 1 to 99 parts by weight of at least one unsaturated aromatic monomer and (b) from 1 to 99 parts by weight of at least one (meth)acrylate ester selected from the group consisting of (hydroxy)alkyl (meth)acrylate esters and poly(meth)acrylate esters of polyols,

(3) an aromatic amine curing agent, and

(4) a peroxide initiator.

The polyepoxides used to prepare the present compositions comprise those compounds containing at least one vicinal epoxy group; i.e., at least one

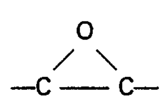

group. These polyepoxides may be saturated or unsaturated, aliphatic, cycloaliphatic, aromatic or heterocyclic and may be substituted if desired with non-interfering substituents such as halogen atoms, hydroxyl groups, ether radicals, and the like. They may also be monomeric or polymeric.

For clarity, many of the polyepoxides and particularly those of the polymeric type are described in terms of epoxy equivalent values. The meaning of this expression is described in U.S. 2,633,458. The polyepoxides used in the present process are preferably those having an epoxy equivalency greater than 1.0.

Various examples of liquid polyepoxides that may be used in the process of the invention are given in U.S. 2,633,458 and it is to be understood that the disclosure of that patent relative to examples of polyepoxides is incorporated by reference into this specification.

Other suitable polyepoxides are disclosed in U.S. 3,356,624, U.S. 3,408,219, U.S. 3,446,762, and U.S. 3,637,618 and the disclosure of these patents relevant to examples of epoxy compounds is incorporated by reference into this specification.

Preferred polyepoxides are the glycidyl polyethers of polyhydric phenols and polyhydric alcohols, especially the glycidyl polyethers of 2,2-bis(4-hydroxyphenyl)propane having an average molecular weight

between about 300 and 3000 and an epoxide equivalent weight between about 140 and 2000 and more preferably an average molecular weight of from about 300 to about 1000 and an epoxide equivalent weight of from about 140 to about 650.

Other suitable epoxy compounds include those compounds derived from polyhydric phenols and having at least one vicinal epoxy group wherein the carbon-to-carbon bonds within the six-membered ring are saturated. Such epoxy resins may be obtained by at least two well-known techniques, i.e., by the hydrogenation of glycidyl polyethers of polyhydric phenols or by the reaction of hydrogenated polyhydric phenols with epichlorohydrin in the presence of a suitable catalyst such as a Lewis acid, e.g., boron trihalides and complexes thereof, and subsequent dehydrochlorination in an alkaline medium. The method of preparation forms no part of the present invention and the resulting saturated epoxy resins derived by either method are suitable in the present compositions.

Preferred saturated epoxy resins are the hydrogenated resins prepared by the process described in U.S. 3,336,241. Especially preferred are the hydrogenated glycidyl ethers of 2,2-bis(4-hydroxyphenyl)-propane, sometimes called the diglycidyl ethers of 2,2-bis(4-cyclohexanol)propane. Other examples of suitable polyepoxides include the glycidyl ethers of novolac resins, i.e., phenol-aldehyde condensates. Preferred resins of this type are those disclosed in U.S. 2,658,885.

Examples of unsaturated aromatic monomers include the vinyl aromatic monomers such as styrene; alpha-methyl styrene; halo- and nitro-substituted styrenes such as vinyl toluene, chlorostyrene, bromostyrene, nitrostyrene; divinylbenzene, tertiarybutylstyrene; 2-vinylpyridine; and vinyl naphthalene. Mixtures of unsaturated aromatic monomers may be employed. A very preferred mixture comprises styrene and divinylbenzene.

Suitable comonomers include the (hydroxy)alkyl esters of acrylic acid and methacrylic acid e.g. methylmethacrylate, ethyl acrylate, butyl acrylate, butyl methacrylate, isobutyl methacrylate, and hydroxypropylmethacrylate. The latter two esters are particularly preferred.

Other preferred comonomers include the polyacrylate and polymethacrylate esters of aliphatic polyhydric alcohols such as, for example, the di- and polyacrylates and the di- and polymethacrylates of alkylene glycols, polyoxyalkylene glycols, alicyclic glycols and higher polyols, such as ethylene glycol, triethylene glycol, tetraethylene glycol, tetramethylene glycol, hexanediol, trimethylolethane, trimethylolpropane, pentaerythritol, and dipentaerythritol, tripentaerythritol.

Typical compounds include but are not limited to trimethylolpropane triacrylate, trimethylolethane triacrylate, trimethylolpropane trimethacrylate, trimethylolethane trimethacrylate, tetramethylene glycol dimethacrylate, ethylene glycol dimethacrylate, triethylene glycol dimethacrylate, pentaerythritil triacrylate, pentaerythritol tetraacrylate, 1,6-hexanediol diacrylate, 1,6-hexanediol dimethacrylate, dipentaerythritol tetraacrylate, dipentaerythritol pentaacrylate, and the like. Particularly preferred esters are neopentyl glycol dimethacrylate, trimethylolpropane trimethacrylate, trimethylolpropane triacrylate, pentaerythritol triacrylate, and 1,3-butylene dimethacrylate.

A preferred range of composition of the polyepoxide and other monomers (aromatic monomers plus comonomers) will range from 30% to 99% polyepoxide and from 1% to 70% other monomers as a weight basis. An especially preferred range is from 50% to 85% polyepoxide and from 15% to 50% other monomers.

The monomer blend will suitably comprise from 5% to 70% by weight of aromatic monomer and from 30% to 95% by weight of ester.

Suitable aromatic amines include the primary and secondary aromatic polyamines as well as their salts and adducts.

Examples of suitable aromatic amines include, among others, meta-phenylene diamine 4,4'-methylene dianiline, 2,4-bis-(p-aminobenzyl)aniline, 2,6-diaminopyridine, 4-chloro-orthophenylene diamine, diamino diphenyl sulphone 4,4'-oxydianiline, 4-bromo-1,3-diaminobenzene, and 1,3-diamino-2,4-diethyl-6-methylbenzene, 2,4-toluenediamine. The two first mentioned compounds have special preference.

The amount of aromatic amine will generally be a curing amount. Operable ranges of aromatic amine are from 0.5 to 1.75 chemical equivalents per chemical equivalent of polyepoxide. Mixtures of aromatic amines may be employed as well.

Examples of peroxide initiator include benzoyl peroxide, tertiary butyl hydroperoxide, ditertiary butyl peroxide, hydrogen peroxide, potassium persulphate, methyl cyclohexyl peroxide, cumene hydroperoxide, acetyl benzoyl peroxide, Tetralin hydroperoxide, phenylcyclohexane hydroperoxide, tertiary butyl peracetate, dicumyl peroxide, tertiary butyl perbenzoate, ditertiary amyl perphthalate, ditertiary butyl peradipate, tertiary amyl percarbonate, and the like, and mixtures thereof; azo compounds such as 2,2'-azobisisobutyronitrile, dimethyl 2,2'-azobisisobutyrate, 2,2'-azobis-(2,4-dimethylvaleronitrile), 2,2'-azobisisobutyramide, and the like. Particularly preferred catalysts include the dialkyl peroxides, tertiary alkyl hydroperoxides, alkyl esters of peroxycarboxylic acids and particularly those of the above noted groups which contain no more than 18 carbon atoms per molecule and which have a half-life of at least one hour at 125°C. An especially useful peroxide is 2,5-dimethyl-2,5-bis(tertiarybutylperoxy)hexane.

The compositions of this invention can optionally contain a compound serving to accelerate the cure of the epoxy resin. Useful accelerators include several classes of compounds known to the art to accelerate aromatic amine cure of epoxy resins. These include, among others, carboxylic acids such as acetic acid, benzoic acid, and salicylic acid; phenolic compounds such as phenol, p-nitrophenol, 2,4-dinitrophenol,

2,4-dichlorophenol, bisphenol A, o-cresol, resorcinol, and oligomeric condensates of phenolic compounds with aldehydes or ketones; imidazoles such as imidazole, 2-methylimidazole, 2-ethyl-4-methylimidazole, 1-benzyl-2-methylimidazole, 1-(2-cyanoethyl)-2-undecylimidazole, and 2-phenyl-4-methyl-5-(hydroxymethyl)imidazole; borate esters such as trimethyl borate, tricresyl borate, and trimethoxyboroxine; titanates such as triethanolamine titanate; metal complexes and salts such as stannous octoate, aluminium triisopropoxide, zinc acetylacetonate, chromium acetylacetonate, ferrous naphthenate, and di(sec-butoxy)-aluminium ethyl acetoacetate complex; strong acids such as sulphuric acid and p-toluenesulphonic acid; and boron trifluoride complexes such as boron trifluoride monoethylamine complex and boron trifluoride diethyl etherate. The class comprising strong acids and boron trifluoride complexes constitutes a preferred class. Boron trifluoride complexes are particularly preferred.

The amount of accelerator or co-accelerator may vary within wide limits from 0.001 to 10 parts per hundred by weight of polyepoxide (phr), and preferably from 0.01 to 5.0 phr, and more preferably 0.05 to 2.0 phr.

The present compositions may be prepared by various techniques. If, for example, the instant compositions are to be utilized within a short time, they can be prepared by simply mixing all the components, adding the customary additives such as fillers, reinforcement fibres, pigments, flame retardant agents, etc. and then moulding and curing the resulting composition. Under certain conditions, it may be desirable to utilize a two package system wherein the epoxy-styrene comonomer blend is one package and the other package comprises the curing agents. A preferred process comprises that of claim 10 set out hereinafter. The accelerators may be incorporated into either package. Under other conditions, it may be desirable to mix the epoxy curing agent (with or without accelerators) into the styrene and/or comonomer for subsequent reaction with the polyepoxide in the presence of the peroxide. Various other modifications will become apparent to one skilled in the art.

As noted hereinbefore, other materials may be mixed or added, including, plasticizers, stabilizers, extenders, oils, resins, tars, asphalts, pigments, reinforcing agents, thixotropic agents, antioxidants, and the like.

The following examples are given to illustrate the preparation of the instant heat-curable thermosetting compositions. It is understood that the examples are embodiments only and are given for the purpose of illustration and the invention is not to be regarded as limited to any specific components and/or specific conditions recited therein. Unless otherwise indicated, parts and percentages in the examples, are parts and percentages by weight.

Epoxy Resin A is a liquid glycidyl polyether of 2,2-bis-(4-hydroxyphenyl)propane having an epoxide equivalent weight of 180—195 and an average molecular weight of about 380.

Epoxy Resin B is a liquid glycidyl polyether of 2,2-bis-(4-hydroxyphenyl)propane having an epoxide equivalent weight of 190—210 and an average molecular weight of about 400.

Epoxy Resin C is a solid glycidyl polyether prepared by glycidation of an oligomeric condensate of ortho-cresol with formaldehyde. Epoxy Resin C has an epoxide equivalent weight of 210—250 and a number average molecular weight of about 550.

C103 is Curithane 103, an aromatic polyamine consisting primarily of 4,4'-methylenedianiline with smaller amounts of other aniline-formaldehyde condensation products.

BABA is 2,4-bis(p-aminobenzyl)aniline, a mixture consisting primarily of this component with smaller amounts of other aniline-formaldehyde condensation products.

TMPTMA is trimethylolpropane trimethacrylate.

NPGDMA is neopentylglycol dimethacrylate.

DVB-55 is a mixture of 55% divinylbenzene and 45% other materials, mostly vinylethylbenzenes, sold by American Hoechst.

Y is CURING AGENT Y, an aromatic amine curing agent sold by The Royal Dutch/Shell Group of Companies.

Z is CURING AGENT Z, an aromatic amine curing agent sold by The Royal Dutch/Shell Group of Companies.

L101 is 2,5-bis(t-butylperoxy)-2,5-dimethylhexane.

Example 1

A series of mixtures were prepared of Epoxy Resin B with supercooled liquid Y and Z, styrene, TMPTMA and Lupersol 101 (Table 1). Brookfield viscosity at 25°C and gel time at 150°C were determined for some of the mixtures. Each mixture was then poured into aluminium moulds with a linear cavity 12 mm square to form bars. Some of the mixtures were also poured between glass plates 3 mm apart to form sheet castings. The bars and sheet castings were cured according to a number of cure schedules as shown in Table 1. Mechanical properties of the cured materials are shown in Table 1. Experiments 1, 2, 3 and 11 are comparative experiments.

One can see from Table 1 that undiluted Epoxy Resin B mixed with Y had an initial viscosity of 3.85 Pa · s, considerably higher than the 1 Pa · s value considered the maximum desirable for filament winding or pultrusion. Dilution with 10 or 25 phr of styrene (Experiments 2 and 3) reduced viscosity to well below 1 Pa · s but caused a considerable drop in heat distortion temperature (HDT). When the multifunctional

acrylic monomer TMPTMA was used as a codiluent (Experiments 4—10), however, a viscosity well below 1 Pa · s was obtained with little or no drop in HDT in comparison with the undiluted system.

When Z instead of Y was used as the curing agent (Experiments 11—14), results paralleled those of Y. Styrene dilution reduced HDT, while dilution with a TMPTMA-styrene mixture with a relatively high ratio of TMPTMA to styrene produced little or no loss in HDT.

TABLE 1

Aromatic amine cured epoxy resin systems diluted with crosslinkable olefinic monomer mixtures[a)]

| Exp. No. | Curing agent, phr[(a, b)] | Monomers phr[(a, c)] | L101 phr | Gel time, 150°C cure plate, sec | Cure cycle | HDT, 11.5 kg/cm² °C | 149°C tensile strength, MPa |
|---|---|---|---|---|---|---|---|
| 1 | Y(25) | | | >300 | 2 hr 80°C<br>2 hr 150°C | 155 | 22.4 |
| 2 | Y(25) | Styrene (10) | 0.5 | >300 | 2 hr 150°C | 132 | 10.3 |
| 3 | Y(25) | Styrene (25) | 0.5 | >300 | 2 hr 150°C | 127 | |
| 4 | Y(25) | TMPTMA (15)<br>Styrene (10) | 0.4 | >600 | 6 hr R.T.<br>2 hr 150°C | 149 | |
| 5 | Y(25) | TMPTMA (15)<br>Styrene (10) | 0.4 | 570 | 6 hr R.T.<br>2 hr 150°C | | |
| 6 | Y(25) | TMPTMA (15)<br>Styrene (30) | 0.5 | >300 | 2 hr 80°C<br>2 hr 150°C | 144 | 23.3 |
| 7 | Y(25) | TMPTMA (20)<br>Styrene (10) | 0.4 | 581 | 7 hr R.T.<br>2 hr 150°C | 148 | |
| 8 | Y(25) | TMPTMA (30)<br>Styrene (20) | 0.4 | >650 | 7 hr R.T.<br>2 hr 150°C | 145 | |
| 9 | Y(25) | TMPTMA (30)<br>Styrene (20) | 0.5 | >300 | 2 hr 80°C<br>2 hr 150°C | 154 | 23.4 |
| 10 | Y(25) | TMPTMA (60)<br>Styrene (40) | 0.5 | >300 | 2 hr 80°C<br>2 hr 150°C | 150 | 27.3 |
| 11 | Z(20) | Styrene (25) | 0.5 | >420 | Same | 128 | |
| 12 | Z(20) | TMPTMA (15)<br>Styrene (30) | 0.5 | >420 | Same | 125 | |
| 13 | Z(20) | TMPTMA (30)<br>Styrene (20) | 0.5 | >420 | Same | 141 | |
| 14 | Z(20) | TMPTMA (60)<br>Styrene (40) | 0.5 | >420 | Same | 145 | |

a) Base Formulation: Epoxy Resin B 100 parts
Amine Curing Agent as above
Olefinic Monomers as above

b) Y=Curing Agent Y
Z=Curing Agent Z

c) TMPTMA=trimethylolpropane trimethacrylate
1,3-BDMA=1,3-butylene dimethacrylate

d) First Tg is that of polystyrene phase; second Tg is that of resin phase.

Example 2

Three different aromatic amine mixtures were melted and mixed with TMPTMA to form viscous solutions. Three solutions were then each mixed at room temperature with a solution of Epoxy Resin A in styrene containing L101. The viscosity at 25°C and the gel times at 150°C and 171°C of each resin-curing agent mixture were determined. Each mixture was then poured into aluminium moulds with a linear cavity 12 mm square to form bars and between glass plates 3 mm apart to form sheet castings. The bars and sheet castings were cured according to two cure schedules: 2 hours at 150°C and 2 hours at 175°C. Mechanical properties of the cured materials are shown in Table 2.

TABLE 2

Epoxy resin systems diluted with styrene and TMPTMA and cured with different aromatic amines

| Exp. | Amine[a] Pbw | Gel time 150°C, sec. | Gel time 171°C, sec. | Cure[b] cycle | HDT, 11.5 $kg/cm^2$, °C | Flex.[c] str., MPa | Flex.[d] str., MPa | Ten.[c] str., MPa | Ten.[d] str., MPa |
|---|---|---|---|---|---|---|---|---|---|
| 1 | BABA (28) | 600 | 396 | A | 158 | 130 | 48 | 52 | 28 |
| 2 | BABA (28) | | | B | 174 | 92 | 60 | 64 | 34 |
| 3 | C103 (28) | 625 | 282 | A | 160 | 123 | 43 | 86 | 25 |
| 4 | C103 (28) | | | B | 162 | 121 | 49 | 63 | 29 |
| 5 | Y (25) | 782 | 350 | A | 150 | 142 | 34 | 79 | 21 |
| 6 | Y (25) | | | B | 156 | 129 | 48 | 90 | 29 |

[a] Base Formulation:

| (Resin component) | Parts by weight | (Curing Agent component) | Parts by weight |
|---|---|---|---|
| Epoxy resin A | 100 | Aromatic amine | Variable |
| Styrene | 14 | TMPTMA | 21 |
| L101 | 0.5 | | |

[b] Cure Cycle A—2 hours at 150°C; Cure Cycle B—2 hours at 175°C.
[c] Room temperature.
[d] 149°C.

Example 3

Two of the commercial aromatic amine mixtures used in the previous example were melted and mixed at different levels with TMPTMA to form a series of viscous liquid curing agent mixtures. These solutions were then each mixed at room temperature with a solution of Epoxy Resin B in styrene containing L101. In one case a catalyst for the epoxy-amine reaction was added. The room temperature viscosity of each mixture and the gel time at 150°C were determined. Bar and sheet castings were prepared as in Example 1 and cured for 2 hours at 150°C. Mechanical properties of the castings are shown in Table 3.

TABLE 3

Epoxy systems diluted with styrene and TMPTMA and cured with different levels of aromatic amines

| Exp. | C103 (parts)[a] | BABA (parts)[a] | 150°C Gel time sec. | HDT, 11.5 $kg/cm^2$ (°C) | 149°C Tens. str. MPa | 149°C Tens. elong. % |
|---|---|---|---|---|---|---|
| 1 | 13 | 10.9 | >420 | | | |
| 2 | 14.2 | 11.8 | >420 | 152 | 21 | 4.5 |
| 3 | 15.2 | 12.8 | 439 | 162 | 26 | 3.1 |
| 4 | 16.3 | 13.7 | 400 | 157 | 27 | 6.3 |
| 5 | 17.4 | 14.6 | 371 | 156 | 20 | 4.6 |
| 6[b] | 15.2 | 12.8 | >420 | 166 | | |
| 7[c] | 15.2 | 12.8 | 307 | 151 | 20 | 2.8 |

a) Base formulation:

| (Resin component) | Parts | (Curing Agent component) | Parts |
|---|---|---|---|
| Epoxy resin B | 100 | C103 | As above |
| Styrene | 14 | BABA | As above |
| L101 | 0.5 | TMPTMA | 14 (except for Exp. 6) |

b) Contained 21 parts TMPTMA.

c) Contained 1 part diisopropoxy bis(acetylacetonato)titanium as accelerator.

Example 4

Melted C103 and BABA were mixed with TMPTMA to produce a viscous liquid curing agent mixture. Epoxy Resin B, styrene, L101 were mixed with different accelerators (Table 4) and shaken to form solutions or suspensions of accelerator in diluted resin. The respective accelerated resin and curing agent mixtures were then mixed together at room temperature. Gel time was determined on a hot plate at 149°C. Brookfield viscosity was determined periodically for the resin-curing agent mixtures. After the mixtures had stood at room temperature for several hours, they were used to make bar castings as in Example 1. The bar castings were cured for 2 hours at 150°C. HDT values for the castings are shown in Table 4.

TABLE 4

Borates and metal complexes as accelerators for diluted aromatic amine-cured epoxy systems[a)]

| Experiment | Accelerator (phr) [(b)] | Time (hours)—brookfield viscosity (mPa · s) | Pot life hr.[d)] | 149°C Gel time, sec. | HDT, 11.5 $kg/cm^2$, °C |
|---|---|---|---|---|---|
| 1 | None | 0—1137, 2—1850, 4—1950 | | 550 | 159, 160 |
| 2 | Stannous octoate (1.0) | 0—1012, 2—4350, 4—13900 | 1.2 | 244 | 160, 160 |
| 3 | Stannous octoate (2.0) | 0—1012, 2—97000 | 0.3 | 75 | 157, 160 |
| 4 | 2:1 DETA/stannous octoate (2.0) [(f)] | 0—925, 2—1860, 4—2255 | 4.5 | 463 | 160 |
| 5 | 2:1 DETA/stannous octoate (4.0) | 0—925, 2—2140, 4—2600 | 3.5 | 390, 450 | 154, 156 |
| 6 | Trimethoxyboroxine (1.0) | 0—1075, 2—2900, 4—4700 | 1.2 | 415 | [(e)] |
| 7 | Trimethoxyboroxine (2.0) | 0—1075, 2—5550, 4—62000 | 0.3 | 130 | [(e)] |
| 8 | Tri(m, p)cresyl borate (Borester 8, U.S. Borax Research) (1.0) | 0—1525, 2—2000, 4—2400 | | 553 | |
| 9 | Borester 8 (2.0) | 0—1625, 2—2050, 4—2520 | | 540 | 152, 156 |
| 10 | Aluminium triisopropoxide[c)] (1.0) | 0—1500, 2—1920, 4—2280 | 6.5 | 224, 230 | |
| 11 | Aluminium triisopropoxide[c)] (2.0) | 0—1500, 2—2200, 4—2320 | 6.0 | 358, 365 | |
| 12 | None | 0—1875, 2—2050, 4—2250, 6—2440 | 14 | 523 | 156, 160 |
| 13 | Zinc acetylacetonate, $Zn(acac)_2$ (1.0) | 0—2650, 1—2850, 2—3100, 3—3200, 5—3900 | 8.6 | 359 | 161, 163 |
| 14 | Ferric acetylacetonate, $Fe(acac)_3$ (1.0) | 0—1800, 2—2525, 4—2480 | | 400 | 157 |
| 15 | Aluminium acetylacetonate, $Al(acac)_3$ (1.0) | 0—2250, 1—2250, 2—2300, 3—2450, 5—2700 | | 460 | 162 |
| 16 | Chromium acetylacetonate, $Cr(acac)_3$ (1.0) | 0—2400, 1—2400, 2—2400, 3—2400, 5—2700 | | 500 | 164 |
| 17 | $(i{-}C_3H_7O)_2$ $Ti(acac)_2$ (1.0) | 0—2100, 1—2100, 2—2400, 3—2450, 5—2650 | 14 | 359 | 160 |
| 18 | Triethanolamine titanate (1.0) | 0—1750, 2—2500, 4—3075 | 5 | 497 | 155 |
| 19 | Ferrous naphthenate (1.0) | 0—2050, 2—3050, 4—2900 | | 436 | 157 |
| 20 | Stannous ethylene glycoxide (1.0) | 0—2250, 2—2250, 4—2600, 6—2800 | 14 | 478 | 159 |

TABLE 4 (continued)

Borates and metal complexes as accelerators for diluted aromatic amine-cured epoxy systems[a)]

| Experiment | Accelerator (phr) [(b)] | Time (hours)—brookfield viscosity (mPa · s) | Pot life hr.[d)] | 149°C Gel time, sec. | HDT, 11.5 $kg/cm^2$, °C |
|---|---|---|---|---|---|
| 21 | Diisopropoxyaluminium ethyl acetoacetate (1.0) | 0—1600, 2—2350, 4—2280 | | 360 | 154 |
| 22 | Di(sec-butoxy)aluminium ethyl acetoacetate (1.0) | 0—1700, 2—2300, 4—2800 | 5.2 | 378 | 148, 153 |
| 23 | Stannous octoate (1.0) | 0—2025, 2—2700, 4—4150, 6—5700 | | 280 | 159 |
| 24 | Dibutyltindilaurate (1.0) | 0—1875, 2—2050, 4—2440, 6—2660 | 10.4 | 465 | 161 |
| 25 | Aluminium octoate[c)] (1.0) | 0—1925, 2—2100, 4—3050, 6—3225 | | 515 | 158 |
| 26 | Aluminium acetylacetonate (1.0) o-cresol novolac (3.0) | 0—3100, 2—3600, 4—4650, 6—5200 | 7 | 250 | 155 |
| 27 | $(i-C_3H_7O)_2$ $Ti(acac)_2$ (2.0) | 0—1175, 2—2000, 4—2100, 6—2300 | 5.4 | 287 | |
| 28 | Cresyl titanate monomer (2.0) | | | 247 | 152 |
| 29 | Zirconium acetylacetonate, $Zr(acac)_4$ (2.0) | 0—1275, 2—1680, 4—2200, 6—2600 | 5.4 | 334 | 145, 147 |
| 30 | $Zn(S_2CN(CH_3)_2)_2$ (2.0) | 0—1500, 2—2200, 4—3400, 6—3600 | 3.8 | 275 | 152, 153 |
| 31 | $Zn(S_2CN(CH_2C_6H_5)_2)_2$ (2.0)[c)] | 0—1650, 2—3100, 4—3100, 6—3600 | | 296 | [(e)] |
| 32 | Zn salt of mercaptobenzothiazole[c)] (2.0) | 0—1600, 2—2600, 4—2700, 6—2700 | | 325 | 150 |

a) System composition (parts):

| Resin component | | Curing Agent component | |
|---|---|---|---|
| Epoxy resin B | 100 | Curithane 103 | 15.4 |
| Styrene | 12 | BABA | 12.6 |
| Accelerator | As indicated | TMPTMA | 17.5 |
| L101 | 0.5 | | |

—Brookfield viscosities were determined at room temperature (23—25°C)

b) Parts per hundred parts of Epoxy Resin B in system.

c) Accelerator was not completely soluble in resin component at level used; accelerated resin component was used as suspension.

d) Time required for Brookfield viscosity to double.

e) Bar castings (cured 2 hours at 150°C) were full of voids.

f) DETA=diethylene triamine.

Example 5

Melted C103 and BABA were mixed with $BF_3$ diethyl etherate, $BF_3$ monoethylamine complex, or metal tetrafluoroborates, and then with TMPTMA (Table 5) in order to produce a viscous liquid curing agent mixture. Epoxy Resin B, styrene, and L101 were mixed together (Table 5) at room temperature to form a diluted resin. The diluted resin and accelerated curing agent mixtures were then mixed together at room temperature. Gel times were determined on hot plates at 149°C or 171°C. Brookfield (or Ubbelohde) viscosity was determined periodically for the resin-curing agent mixtures. After the mixtures had stood at room temperature for several hours, some were used to make bar castings as in Example 1. The bar castings were cured for 2 hours at 150°C. HDT values for the castings are shown in Table 5.

"Pot life" (approximate time required for doubling of viscosity at room temperature) was determined for many of the experiments in Tables 4 and 5 from the viscosity-time data given.

TABLE 5

$BF_3$ Complexes and metal tetrafluoroborates as accelerators for diluted aromatic amine cured epoxy systems

| Experiment | Accelerator (phr) | Time (hours)—brookfield viscosity (mPa · s) | Pot life hr.[d] | 149°C Gel time, sec. | HDT, 11.5 kg/cm², °C |
|---|---|---|---|---|---|
| 1 | None | 0—430, 2—415 | | 453 | 159, 162 |
| 2 | None | 0—785, 3—875, 6—900 | | 460 | |
| 3 | None | 0—800, 2—825, 4—875, 6—900 | 20? | 465 | |
| 4 | None | 0—750, 2—825, 4—950, 5.25—1050 | 10 | 490—540 | |
| 5 | $CH_3CH_2NH_2BF_3$ (0.17) | 0—800, 2—875, 4—900, 6—1463 | ~ 7 | 286 | |
| 6 | $CH_3CH_2NH_2BF_3$ (0.33) | 0—825, 2—713[e], 4—675, 6—2000 | ~ 5 | 184 | |
| 7 | $CH_3CH_2NH_2BF_3$ (0.5) | 0—925, 2—575[e], 4—1150, 6—3600 | < 5 | 130 | |
| 8 | $CH_3CH_2NH_2BF_3$ (1.0) | | | 119 | |
| 9 | $(CH_3CH_2)_2O \cdot BF_3$ (0.1) | 0—875, 2—975, 4—1013, 525—1100 | 10 | 380—400 | |
| 10 | $(CH_3CH_2)_2O \cdot BF_3$ (0.17) | 0—750, 3—963, 6—1125 | 9 | 386 | |
| 11 | $(CH_3CH_2)_2O \cdot BF_3$ (0.2) | 0—875, 2—963, 4—1225, 5.25—1325 | 7.5 | 225—260 | |
| 12 | $(CH_3CH_2)_2O \cdot BF_3$ (0.33) | 0—725, 2—875, 4—1225, 6—6000 | > 4 | 80 | |
| 13 | $(CH_3CH_2)_2O \cdot BF_3$ (0.33) | 0—788, 3—875, 6—5850 | ~ 3 | 100 | |
| 14 | $(CH_3CH_2)_2O \cdot BF_3$ (0.5) | 0—430, 2—1400, 5—5000 | 1.2 | 62 | 162, 163 |

TABLE 5 (continued)

$BF_3$ Complexes and metal tetrafluoroborates as accelerators for diluted aromatic amine cured epoxy systems

| Experiment | Accelerator (phr) | Time (hours)—brookfield viscosity (mPa · s) | Pot life hr.[d] | 149°C Gel time, sec. | HDT, 11.5 kg/cm², °C |
|---|---|---|---|---|---|
| 15 | $(CH_3CH_2)_2O \cdot BF_3$ (0.5) | 0—763, 3—3450, 6—40000 | 1 | 45 | |
| 16 | $(CH_3CH_2)_2O \cdot BF_3$ (0.67) | 0—712, 2—630[e], 4-gelled (hot) | | | |
| 17 | $(CH_3CH_2)_2O \cdot BF_3$ (1.0) | 0—762, 2-gelled (hot) | | | |
| 18 | $(CH_3CH_2)_2O \cdot BF_3$ (1.0)+$C_6H_5N(CH_3)_2$ (0.85) | gelled after 2 hours | | | |
| 19 | None | 140—946, 265—1009, 385—1083[c] | ~20 | 562 | |
| 20 | $(CH_3CH_2)_2O \cdot BF_3$ (0.33) | 125—1603, 280—3466, 335—4432, 405—6676[c] | 2.5 | 81 | |
| 21 | 45% aq. $Cu(BF_4)_2$ (1.0) | 120—1835, 275—2671, 335—5531, 395—8216[c] | 3.5 | 76 | |
| 22 | 40% aq. $Zn(BF_4)_2$ (0.5) | 135—1817, 295—4134, 355—6356, 405—8454[c] | 3.0 | 85 | |

[a] System composition (parts):

| Resin component | | Curing Agent component | |
|---|---|---|---|
| Epoxy resin B | 100 | Curithane 103 | 15.2 |
| Styrene | 15 | BABA | 12.8 |
| L101 | 0.5 | Accelerator | As indicated |
| | | TMPTMA | 15.0 |

In curing agent preparation, molten Curithane 103 and BABA were mixed at 100°C; accelerator was added and the mixture was heated to 150°C with periodic shaking to dissolve any precipitate which formed. The mixture was then cooled to 80°C; TMPTMA was added and the mixture was shaken until homogeneous. Brookfield viscosities were determined at room temperature (23—25°C).

[b] Parts per hundred parts Epoxy Resin B in system.

[c] Time (minutes)-Ubbelohde (25°C) viscosity (mPa · s).

[d] Time required for Brookfield or Ubbelohde viscosity to double.

[e] Some Brookfield viscosities for some samples were lower than viscosities determined at earlier times because of temperature rise.

Example 6

Melted C103 and BABA were mixed with three different acrylic monomers (Table 6) to produce viscous liquid curing agent mixtures. Epoxy Resin B, divinylbenzene, L101 and benzoquinone (as inhibitor) were mixed to form a diluted resin. The diluted resin and curing agent mixtures were then mixed together at room temperature. Brookfield viscosity was determined for the resin-curing agent mixtures; gel time was determined on a hot plate at 150°C. The mixtures were used to make bar and sheet castings as in Example 1. The castings were cured for 1 hour at 100°C, 1 hour at 150°C and 1 hour at 171—175°C. Mechanical properties of the castings are listed in Table 6.

TABLE 6

Aromatic amine cured epoxy systems diluted with divinylbenzene and different acrylic monomers[a)]

| Acrylic monomer | Neopentyl glycol dimethacrylate | Isobutyl methacrylate | Hydroxypropyl methacrylate |
|---|---|---|---|
| Acrylic monomer, phr[b)] | 7.5 | 3.75 | 7.5 |
| Room temp. brookfield viscosity, mPa·s | 800 | 900 | 850 |
| 150°C Gel time, sec. | 455 | 430 | 380 |
| Heat deflection temp. 11.5 kg/cm², °C | 165 | 161 | 163 |
| Dynamic mechanical Tg, °C (tanδ peak, Rheometrics) | 189 | 187 | 184 |
| Room temp. tensile strength, MPa | 63 | 60 | 68 |
| Room temp. tensile modulus, MPa | 2900 | 3090 | 3020 |
| Room temp. tensile elongation, % | 3.2 | 3.1 | 3.5 |
| 149°C tensile strength, MPa | 29 | 27 | 22 |
| 149°C tensile modulus, MPa | 1330 | 1260 | 1190 |
| 149°C tensile elongation, % | 5.8 | 5.8 | 7.2 |

a) System composition (parts by weight)

| Resin component | | Curing Agent component | |
|---|---|---|---|
| Epoxy resin B | 100 | Curithane 103 | 15.2 |
| DVB-55 | 18 | BABA | 12.8 |
| L101 | 0.4 | Acrylic monomer | As above |
| Benzoquinone | 0.015 | Hydroquinone | 1000 ppm on monomer |

b) Parts per hundred parts Epoxy Resin B in system.

**Claims**

1. A curable composition comprising
(1) 100 parts by weight of a polyepoxide containing at least one vicinal epoxy group per molecule,
(2) from 5 to 300 parts by weight of a blend comprising

(a) from 1 to 99 parts by weight of at least one unsaturated aromatic monomer and
(b) from 1 to 99 parts by weight of at least one (meth)acrylate ester, being an (hydroxy)alkyl (meth)acrylate or poly(meth)acrylate ester of a polyol,

(3) an aromatic amine curing agent in an amount of from 0,5 to 1,75 eq. per eq. epoxy resin, and
(4) a peroxide initiator.

2. The composition of claim 1, wherein the polyepoxide is a glycidyl polyether of a polyhydric phenol.

3. The composition of claim 2, wherein the polyepoxide is a glycidyl polyether of 2,2-bis(4-hydroxyphenyl)propane.

4. The composition of claims 1—3, wherein the unsaturated aromatic monomer is styrene.

5. The composition of claims 1—4, wherein the unsaturated aromatic monomer is a mixture of styrene and divinylbenzene.

6. The composition of claim 5, wherein the ester is hydroxypropylmethacrylate, isobutylmethacrylate or a poly(meth)acrylate ester of an aliphatic polyol.

7. The composition of claim 6, wherein the polymethacrylate ester is trimethylolpropane trimethacrylate.

8. The composition of claim 6, wherein the polymethacrylate ester is neopentylglycol dimethacrylate.

9. The composition of claims 1—8, wherein the aromatic amine is 2,4-bis(p-aminobenzyl)aniline or 4,4'-methylenedianiline.

10. A process for preparing a curable composition by incorporating an aromatic amine curing agent and a peroxide initiator into a blend comprising

(1) 100 parts by weight of a polyepoxide containing at least one vicinal epoxy group per molecule and
(2) from 5 to 300 parts by weight of a blend comprising

(a) from 1 to 99 parts by weight of at least one unsaturated aromatic monomer and
(b) from 1 to 99 parts by weight of at least one (meth)acrylate ester, being an (hydroxy)alkyl (meth)acrylate or poly(meth)acrylate ester of a polyol.

**Patentansprüche**

1. Härtbare Masse umfassend
(1) 100 Gew.-Teile eines Polyepoxids, enthaltend mindestens eine vicinale Epoxygruppe pro Molekül
(2) 5 bis 300 Gew.-Teile eines Gemisches aus

a) 1 bis 99 Gew.-Teilen mindestens eines ungesättigten aromatischen Monomers und
b) 1 bis 99 Gew.-Teilen mindestens eines (Meth)acrylatesters, der ein (Hydroxy)alkyl—(meth)acrylat oder Poly(meth)acrylatester eines Polyols ist.

(3) ein aromatisches Amin-Härtungsmittel in einer Menge von 0,5 bis 1,75 Äq. pro Äq. Epoxyharz und
(4) einen Peroxidinitiator.

2. Masse nach Anspruch 1, wobei das Polyepoxid ein Glycidylpolyether eines mehrwertigen Phenols ist.

3. Masse nach Anspruch 2, wobei das Polyepoxid ein Glycidylpolyether von 2,2-Bis-(4-hydroxyphenyl)-propan ist.

4. Masse nach Ansprüchen 1 bis 3, wobei das ungesättigte aromatische Monomer Styrol ist.

5. Masse nach Ansprüchen 1 bis 4, wobei das ungesättigte aromatische Monomer ein Gemisch aus Styrol und Divinylbenzol ist.

6. Masse nach Anspruch 5, wobei der Ester Hydroxypropylmethacrylat, Isobutylmethacrylat oder ein Poly(meth)acrylatester eines aliphatischen Polyols ist.

7. Masse nach Anspruch 6, wobei der Polymethacrylatester Trimethylolpropan-trimethacrylat ist.

8. Masse nach Anspruch 6, wobei der Polymethacrylatester Neopentylglykol-dimethacrylat ist.

9. Masse nach Ansprüchen 1 bis 8, wobei das aromatische Amin 2,4-Bis(p-aminobenzyl)anilin oder 4,4'-Methylendianilin ist.

10. Verfahren zur Herstellung einer härtbaren Masse durch Einbau eines aromatischen Amin-Härtungsmittels und Peroxidinitiators in ein Gemisch aus

(1) 100 Gew.-Teilen eines Polyepoxids, enthaltend mindestens eine vicinale Epoxygruppe pro Molekül und
(2) 5 bis 300 Gew.-Teilen eines Gemisches aus

a) 1 bis 99 Gew.-Teilen mindestens eines ungesättigten aromatischen Monomers und
b) 1 bis 99 Gew.-Teilen mindestens eines (Meth)acrylatesters der ein (Hydroxy)alkyl(meth)acrylat oder Poly(meth)acrylatester eines Polyols ist.

**Revendications**

1. Composition durcissable comprenant
(1) 100 parties en poids d'un polyépoxyde contenant au moins un groupe époxy vicinal par molécule,
(2) de 5 à 300 parties en poids d'un mélange comprenant

(a) de 1 à 99 parties en poids d'au moins un monomère aromatique insaturé et
(b) de 1 à 99 parties en poids d'au moins un (méth)acrylate, qui est un (méth)acrylate d'(hydroxy)alkyle ou un poly(méth)acrylate d'un polyol,

(3) un agent durcisseur de type amine aromatique, en une quantité de 0,5 à 1,75 équivalents par équivalent de résine époxyde, et

(4) un initiateur de type peroxyde.

2. Composition selon la revendication 1, dans laquelle le polyépoxyde est un polyéther glycidylique d'un phénol polyhydrique.

3. Composition selon la revendication 2, dans laquelle le polyépoxyde est un polyéther glycidylique de 2,2-bis(4-hydroxyphényl)propane.

4. Composition selon les revendications 1 à 3, dans laquelle le monomère aromatique insaturé est le styrène.

5. Composition selon les revendications 1 à 4, dans laquelle le monomère aromatique insaturé est un mélange de styrène et de divinylbenzène.

6. Composition selon la revendication 5, dans laquelle l'ester est le méthacrylate d'hydroxypropyle, le méthacrylate d'isobutyle ou un poly(méth)acrylate d'un polyol aliphatique.

7. Composition selon la revendication 6, dans laquelle le polyméthacrylate est le triméthacrylate de triméthylolpropane.

8. Composition selon la revendication 6, dans laquelle le polyméthacrylate est le diméthacrylate de néopentylglycol.

9. Composition selon les revendications 1 à 8, dans laquelle l'amine aromatique est la 2,4-bis(p-aminobenzyl)aniline ou la 4,4'-méthylène-dianiline.

10. Procédé de préparation d'une composition durcissable par incorporation d'un agent durcisseur de type amine aromatique et d'un initiateur de type peroxyde dans un mélange comprenant

(1) 100 parties en poids d'un polyépoxyde contenant au moins un groupe époxy vicinal par molécule, et

(2) de 5 à 300 parties en poids d'un mélange comprenant

(a) de 1 à 99 parties en poids d'au moins un monomère aromatique insaturé et
(b) de 1 à 99 parties en poids d'au moins un (méth)acrylate, qui est un (méth)acrylate d'(hydroxy)alkyle ou un poly(méth)acrylate d'un polyol.